# EUROPÄISCHE PATENTANMELDUNG

(11) **EP 2 530 029 A1**
(43) Veröffentlichungstag der Anmeldung: **05.12.2012**
(21) Anmeldenummer: 12170467.0
(22) Anmeldetag: 01.06.2012
(51) Int. Cl.: B65D 65/40, B32B 27/36, B65D 65/46, B32B 27/10

(54) **Verpackungsmaterial für Lebensmittel**

(30) Priorität: 01.06.2011 DE 102011050815; 09.08.2011 DE 202011050943 U
(71) Anmelder: "Deutsche See" GmbH, 27572 Bremerhaven (DE)
(72) Erfinder: Bölz, Uwe, 85244 Röhrmoos (DE)
(74) Vertreter: Bauer Vorberg Kayser Patentanwälte

(57) **Zusammenfassung**

Die Erfindung betrifft ein Verpackungsmaterial (20) für Lebensmittel. Dieses ist durch eine Mehrschichtfolie (28) gebildet, aufweisend
- eine Papierschicht (34),
- eine Siegelschicht (36) aus einem biologisch abbaubaren, fett- und wasserdichten Material.

Die Erfindung betrifft weiterhin ein Verfahren zur Herstellung eines solchen Verpackungsmaterials (20).

## Beschreibung

Die vorliegende Erfindung betrifft ein Verpackungsmaterial für Lebensmittel, gebildet durch eine Mehrschichtfolie. Derartige Verpackungsmaterialien werden insbesondere zur Verpackung von frischen und/oder leicht verderblichen Lebensmitteln eingesetzt, die im Einzelhandel, Groß- oder Halbgroßhandel verkauft werden.

Eine wesentliche Anforderung an Verpackungsmaterialien für Lebensmittel besteht darin, dass die Verpackung möglichst wasserdicht, fettdicht und auch geruchsdicht sein soll.

Die DE 602 01 396 T2 beschreibt eine gattungsgemäße Verpackung für Lebensmittel. Die beschriebene Verpackung umfasst zwei übereinander liegende Verbundfolien, die wärmeschweißbar ausgeführt sind. Die beiden Kunststoffschichten weisen eine Rauheit BENDTSEN DIN 53108 kleiner oder gleich 1.200 ml/min. auf. Die wärmeschweißbaren Schichten besitzen untereinander einen Reibungskoeffizienten kleiner oder gleich 0,6, um das leichte Öffnen der Fülle sicherzustellen. Die geforderte Wasser- und Fettdichtigkeit wird durch eine Aluminiumschicht erreicht, die Teil der Verbundfolie ist. Die auf der Aluminiumschicht aufgebrachte Polymerschicht, die in der Regel ein Polyethylen enthält, wird als Siegelschicht bezeichnet, da durch diese ein Versiegeln der Verpackung ermöglicht wird. Unter dem Begriff Versiegeln, wie er hier benutzt wird, wird allgemein das Verschließen gemeint. Durch das Versiegeln der Verpackung wird verhindert das Stoffe, ungewollt in die Verpackung eindringen oder aus ihr entweichen können.. Ein wesentlicher Nachteil dieser Verpackung besteht darin, dass ein kostenintensiver und nur begrenzt vorhandener Rohstoff, nämlich das Aluminium, eingesetzt wird. Aluminium hat weiterhin den Nachteil, dass die Entsorgung aufwendig und teuer ist. Gerade im Verbund mit anderen Stoffen, wie beispielsweise mit Papier und Kunststoff, ist eine getrennte Entsorgung sehr kostspielig. Im Hinblick auf Umweltaspekte ist eine solche Verbundfolie als sehr nachteilig anzusehen.

Aus der FR 2 775 252 A1 ist ferner eine Schichtfolie für die Verpackung von Lebensmitteln bekannt, die eine Papierschicht aufweist, an der eine fett- und wasserdichte Polyethylenschicht aufgebracht ist.

Der vorliegenden Erfindung liegt die Aufgabe zugrunde, ein Verpackungsmaterial für Lebensmittel zu schaffen, das die üblicherweise geforderten Anforderungen, beispielsweise Wasser-, Fett- und Geruchsdichtigkeit, erfüllt. Im Gegensatz zu Produkten des Standes der Technik soll das Verpackungsmaterial aber auch durch einen niedrigeren Energie- und Rohstoffverbrauch umweltfreundlich herstell- und entsorgbar sein. Weiterhin ist es Aufgabe der Erfindung, ein Verfahren zur Herstellung eines solchen Herstellungsverfahrens vorzuschlagen.

Gelöst wird die Aufgabe durch ein Verpackungsmaterial für Lebensmittel, gebildet durch eine Mehrschichtfolie, aufweisend
- eine Papierschicht,
- eine Siegelschicht aus einem biologisch abbaubaren, fett- und wasserdichten Material.

Die Aufgabe wird weiterhin durch ein Verfahren zur Herstellung eines solchen Verpackungsmaterials gelöst, dass die Verfahrensschritte
- Bereitstellen einer Siegelschicht in einem kontinuierlichen Verfahren,
- Bedrucken der Papierschicht,
- Verbinden der Siegelschicht auf die Papierschicht.
aufweist.

Der Grundgedanke der Erfindung basiert im Wesentlichen darauf, die Aluminiumschicht oder Metallbeschichtung durch ein biologisch abbaubares Material zu ersetzen. Aus dem Stand der Technik ist ein derartiges Produkt nicht bekannt, für derartiges Verpackungsmaterial wird stets auf eine nicht biologisch abbaubare Siegelschicht zurückgegriffen. Offensichtlich wurde bisher nicht erkannt, dass eine Siegelschicht auch aus einem biologisch abbaubaren Material bestehen kann. Das erfindungsgemäße Verpackungsmaterial kann somit zusammen mit Resten der verpackten Lebensmittel oder auch abgelaufenen, d.h. mit nicht mehr für den menschlichen Genuss geeigneten Inhalten per Kompostierung oder Verbrennung entsorgt werden.

Unter den Bezeichnungen "fettdichtes Material" bzw. "wasserdichtes Material", wie sie hier verwendet werden, werden alle Materialien verstanden, die das Eindringen bzw. Austreten von Fett bzw. Wasser ausreichend verhindern. Eine völlige Fett- bzw. Wasserdichtheit ist nicht zwingend notwendig.

Die erfindungsgemäße Siegelschicht kann ein biologisch abbaubares Biopolymer umfassen. Biopolymere sind biologisch abbaubare Polymere basierend auf nachwachsenden Rohstoffen oder biologisch abbaubare Polymere auf Erdölbasis oder biologisch nicht abbaubare Polymere auf Basis nachwachsender Rohstoffe. Die Biopolymere, wie sie hier verwendet werden, können aus biogenen Rohstoffen, aber auch aus erdölbasierten Polymeren bestehen. Damit erfolgt eine Abgrenzung von den konventionellen, erdölbasierten Werkstoffen bzw. Kunststoffen, die nicht biologisch abbaubar sind, wie z. B. Polyethylen (PE), Polypropylen (PP) und Polyvinylchlorid (PVC).

Derartige biologisch abbaubare Folien sind zum Beispiel in dem Artikel "Biologisch abbaubare Kunststoffe" von Wolfgang Bayer, herausgegeben 2009 von der Pressestelle des Umweltbundesamt, beschreiben.

In einer bevorzugten Ausgestaltung der vorliegenden Erfindung umfasst die Siegelschicht ein Polyesterpolymer. Ferner kann das verwendete Biopolymer zähelastisch und/oder hydrophob bis hydrophil sein. Anstelle eines reinen Biopolymers ist auch die Verwendung von (bioabbaubarem bzw. biobasiertem) Wachs bzw. einem Gemisch aus Wachs und Biopolymeren denkbar.

Das Verpackungsmaterial kann für frische und/oder tiefgefrorene Lebensmittel, insbesondere wenn sie feucht oder ölig bzw. fettig sind, verwendet werden. Sie dient sowohl als dichte und schützende Transportverpackung, als auch für die anschließende haltbarkeitsverlängernde Unterbringung im Kühl- bzw. Gefrierschrank. Alle eingesetzten Rohstoffe und somit auch das Verpackungsmaterial selbst sind biologisch abbaubar und erfüllen die entsprechende EU-Norm. Anstelle eines Polyesterpolymers ist auch die Verwendung von naturidentischen Wachsen bzw. einem Gemisch aus Wachs und Polyesterpolymer denkbar.

Vorteilhafterweise ist die Siegelschicht thermoaktivierbar. Durch Wärmezufuhr ändert die Siegelschicht ihren physikalischen Zustand, die Siegelschicht schmilzt, wodurch sie beispielsweise verschweiß- bzw. verklebbar ist. Durch die Zufuhr von Wärme kann die Siegelschicht mit sich selbst bzw. können verschiedene Siegelschichten miteinander verbunden werden, sie sind thermofusionierbar. Denkbar ist aber auch, dass die Siegelschichten unter Anwendung von Druck zusammenfügbar sind. Indem die Siegelschicht thermoaktivierbar ist, kann eine entsprechend dichte Verpackung aus dem Verpackungsmaterial hergestellt werden. Es hat sich gezeigt, dass sich insbesondere zäh-elastische und bioabbaubare Polymere eignen, welche im Bereich von 50 bis 180° C, vorzugsweise zwischen 80 und 120° C schmelzen und damit beim Versiegeln unter leichtem Anpressdruck eine dichte Siegelnaht ausbilden. Polymere auf Polyesterbasis sind lebensmittelrechtlich für den direkten Kontakt mit Lebensmitteln zugelassen und eignen sich auch aus diesem Grunde als Ausgangsstoff für das erfindungsgemäße Verpackungsmaterial.

Die Papierschicht weist eine Außen- und eine Innenseite auf, wobei die Papierschicht bevorzugt mit ihrer Innenseite an der Siegelschicht anliegt bzw. mit ihr verbunden ist. Vorteilhafterweise kann die Papierschicht auf ihrer Außen- und/oder Innenseite eine ebenfalls biologisch abbaubare Schutzlackschicht aufweisen, die die Papierschicht vor Feuchtigkeit und/oder thermischen und/oder mechanischen Angriffen von außen schützt. Diese Lackschicht kann auch zur gezielten Verbesserung der Wasserdampfbarriere eingesetzt werden.

Weiterhin ist erfindungsgemäß vorgesehen, dass die Papierschicht auf ihrer Außenseite einen Aufdruck aufweisen kann, der beispielsweise den Verpackungsinhalt der Verpackung beschreibt. Der Aufdruck kann ebenfalls durch die Schutzlackschicht geschützt sein.

In einer besonders vorteilhaften Ausführungsvariante ist es auch möglich, die Papierschicht halbtransparent oder transparent auszuführen und den Aufdruck auf der der Siegelschicht zugewandten Seite, der Innenseite der Papierschicht, aufzubringen. Der Aufdruck ist dann durch die Papierschicht hindurch sichtbar, er befindet sich aber geschützt zwischen der Siegel- und der Papierschicht. Eine Schutzlackschicht zum Schutz des Aufdrucks ist dann nicht notwendig, allerdings kann eine solche Schicht zum Schutz der Papierschicht trotzdem vorgesehen sein. Ist eine transparente oder halbtransparente Papierschicht gewünscht, kann diese beispielsweise aus Pergamin, einem weitgehend fettdichten Papier, gebildet sein.

Es hat sich gezeigt, dass eine wesentliche Eigenschaft von Verpackungsmaterial darin besteht, dass dieses leicht und möglichst ohne Hilfsmittel zu öffnen ist. Dies soll insbesondere auch dann möglich sein, wenn der Benutzer zum Schutz vor dem nassen, fettigen oder öligen Inhalt Handschuhe trägt oder nasse Hände hat. Diese Eigenschaft des leichten Öffnens wird durch die relativ steife und/oder spröde Papierschicht realisiert. Sie kann dadurch weiter verstärkt werden, dass die Siegelschicht Füllstoffe, bevorzugt anorganische und/oder mineralische Füllstoffe aufweist. Als anorganischer Füllstoff hat sich insbesondere Talkum oder Mikrotalkum als besonders geeignet erwiesen. Die Zugabe des anorganischen Füllstoffs verbessert einerseits die Barriereeigenschaften und die Fett- und Ölbeständigkeit der Siegelschicht, andererseits führt der Füllstoff zu einem papierähnlichen Reißverhalten, was die leichte Öffnung des Verpackungsmaterials ermöglicht. Die Steifigkeit des Gesamtverbundes wird verbessert und der Anteil an natürlichen Rohstoffen erhöht. Ferner wird hierdurch auch der Anteil an aus petrochemischen Vorstufen erzeugtem Polymer reduziert.

Talkum ist ein günstiger Rohstoff, der zudem die Thermofusionierbarkeit der Siegelschicht nicht negativ beeinflusst. Beim Schmelzvorgang des Verpackungsmaterials wird der Füllstoff sozusagen weggedrückt und behindert somit den Fusionsvorgang nicht. Der Füllstoff ist zudem für den direkten Kontakt mit Lebensmitteln zugelassen und chemisch inert.

Durch eine dosierte Zugabe von Füllstoffen können die Eigenschaften des Verpackungsmaterials explizit an die jeweiligen gewünschten Anforderungen angepasst werden. Auch führen mineralische Füllstoffe dazu, dass das Verpackungsmaterial falzbar ist. Ein gefalzter Bereich der Mehrschichtfolie verbleibt in seiner Ausrichtung und stellt sich im Gegensatz zum reinen Polymer nicht von selbst zurück. Auch ist es möglich, durch die Zugabe von Füllstoffen den Gleitwert der Mehrschichtfolie positiv zu beeinflussen und somit den sogenannten Glasplatteneffekt zu verhindern. Das Verpackungsmaterial gleitet somit ohne kritische Anhaftung auf sich selbst, wodurch die Verarbeitung des Verpackungsmaterials deutlich erleichtert und eine stückweise Entnahme aus Stapeln ermöglicht wird.

Das Verblocken, das bei Verpackungsmaterialien aus dem Stand der Technik ein ernstzunehmendes Problem darstellt, wird durch die erfindungsgemäße Mehrschichtfolie behoben. Unter Verblocken wird hier ein ungewolltes Zusammenkleben aufeinanderliegender Schichten verstanden. Indem die Siegelschicht Füllstoffe aufweist, wird beispielsweise bei aufgerolltem Verpackungsmaterial, das erhöhter Wärme ausgesetzt ist, wie dies bei Sonneneinstrahlung der Fall ist, ein Zusammenkleben aufeinanderliegender Siegelschichten verhindert.

In einer erfindungsgemäßen Ausführungsform besteht die Siegelschicht aus mehreren Schichten mit unterschiedlichem Aufbau. In einer bevorzugten Ausgestaltung weist die Siegelschicht eine Kontaktschicht, eine Übergangsschicht und eine zwischen der Kontaktschicht und Übergangsschicht liegenden Basisschicht auf. Es hat sich als besonders vorteilhaft erwiesen, wenn die Basisschicht eine hohe Konzentration anorganischer Füllstoffe aufweist, beispielsweise 40 bis 60 Gew.%, während sich die anschließende Kontaktschicht, die mit dem zu verpackenden Lebensmitteln in Kontakt kommt, nur eine geringere Konzentration an anorganischen Füllstoffen aufweist, beispielsweise 20 bis 40 Gew.%. Auf der gegenüberliegenden Seite der Basisschicht befindet sich die Übergangsschicht, an die sich die Papierschicht anschließt. Diese Übergangsschicht sollte aufgrund der Klebefähigkeit mit dem Papier eher glatt ausgeführt sein, damit weniger Klebstoff für eine gute Haftung verwendet werden muss. Es hat sich gezeigt, dass ein Anteil an anorganischen Füllstoffen in Höhe von etwa 20 bis 40 Gew.% gute Ergebnisse bringt.

Die Basisschicht ist vorteilhafterweise doppelt so dick wie die beiden angrenzenden Schichten. Beispielsweise hat sich eine Dicke von etwa 20 Mikrometer für die Basisschicht und jeweils etwa 10 Mikrometer für die Kontakt- und Übergangsschicht als geeignet erwiesen. Die Mehrschicht-Siegelschicht bzw. eine Siegelschichtfolie wird bevorzugt in einem kontinuierlichen Verfahren hergestellt. Hierfür werden die Schichten in getrennten Extrudern insbesondere zeitgleich aufgeschmolzen und gefördert. Die vorgeformten Schichten werden mit Hilfe eines Feedblocks im Schmelzezustand zusammengeführt (= Coextrusion). Dadurch wird eine ausreichende Haftung und spannungsarme Verbindung der einzelnen Schichten zueinander erreicht.

Das Aufbringen der Siegelschicht auf die Papierschicht kann mittels Extrusion/Coextrusion, Hotmelt- bzw. Wachsauftragssystemen oder auch in Druck- bzw. Beschichtungsaggregaten als Dispersion bzw. gelöst in organischen Lösungsmitteln bzw. zu 100% als Feststoff erfolgen. Die Siegelschicht wird vorzugsweise auf die Papierschicht aufkaschiert. In einer besonders bevorzugten Ausgestaltung wird die Siegelschicht als Folie auf die Papierschicht aufgebracht. Durch die Verwendung einer Folie wird die Porenfreiheit und somit die Dichtigkeit verbessert. Eine Folie erhöht weiterhin die für die Dichtigkeit wichtige Durchstoßfestigkeit des Verbundes.

In einem weiteren Prozess wird die Papierschicht auf ihrer Außen- oder Innenseite bedruckt und ggf. mit einer Schutzlackschicht versehen. Anschließend wird die Siegelschicht auf die Papierschicht aufkaschiert d. h. vorzugsweise mit einem lösungsmittelfreien Biokleber verklebt. Geeignet ist beispielsweise ein lösungsmittelfreier Zweikomponentenklebstoff (2K LF). Alternativ ist es erfindungsgemäß auch möglich, das Verpackungsmaterial erst im Anschluss an den Kaschiervorgang oder "inline" zu bedrucken und ggf. mit einer Schutzlackschicht zu versehen.

Die Herstellung des Verpackungsmaterials kann als Schlauch erfolgen. Dieser kann durch vorheriges Falten und einseitiges Verkleben oder Verschweißen einer doppelbreiten Bahn oder durch beidseitiges Verkleben oder Verschweißen zweier gleichbreiter Bahnen in einen kontinuierlichen Prozess erzeugt werden. Zur Verpackung des Produktes wird der Schlauch auf Länge geschnitten und einseitig zu einer noch offenen Tüte verschweißt. Anschließend wird das zu verpackende Gut eingeschoben und die noch offene Öffnung nun ebenfalls durch Verschweißen wasser- und luftdicht verschlossen. Alternativ ist es auch möglich, die Mehrschichtfolienschichten miteinander zu verkleben und/oder zu falzen/klammern bzw. in anderer Art mechanisch dicht zu verschließen. Hierdurch wird der Schweißprozess eingespart, allerdings stellt das Verschweißen üblicherweise die sicherste, maschinentechnisch einfachste und dichteste Verschlussmethode dar. Die Herstellung von geeigneten Verpackungen kann auf vielfältige Weise erfolgen, die Erfindung soll nicht auf die beschriebenen Herstellungsbeispiele beschränkt sein.

Die nachfolgenden Figuren verdeutlichen die Erfindung. Es wird explizit darauf hingewiesen, dass die gezeigten Größenverhältnisse nur der Anschauung dienen, je nach Anforderung an das Verpackungsmaterial können diese auch anders sein. Es zeigen:
- Fig. 1:: eine Prinzipdarstellung eines Schlauchs aus einem erfindungsgemäßen Verpackungsmaterial,
- Fig. 2:: eine vereinfachte Prinzipdarstellung eines erfindungsgemäßen Verpackungsmaterials,
- Fig. 3:: eine Schnittdarstellung des erfindungsgemäßen Verpackungsmaterials in einer bevorzugten Ausführungsvariante.

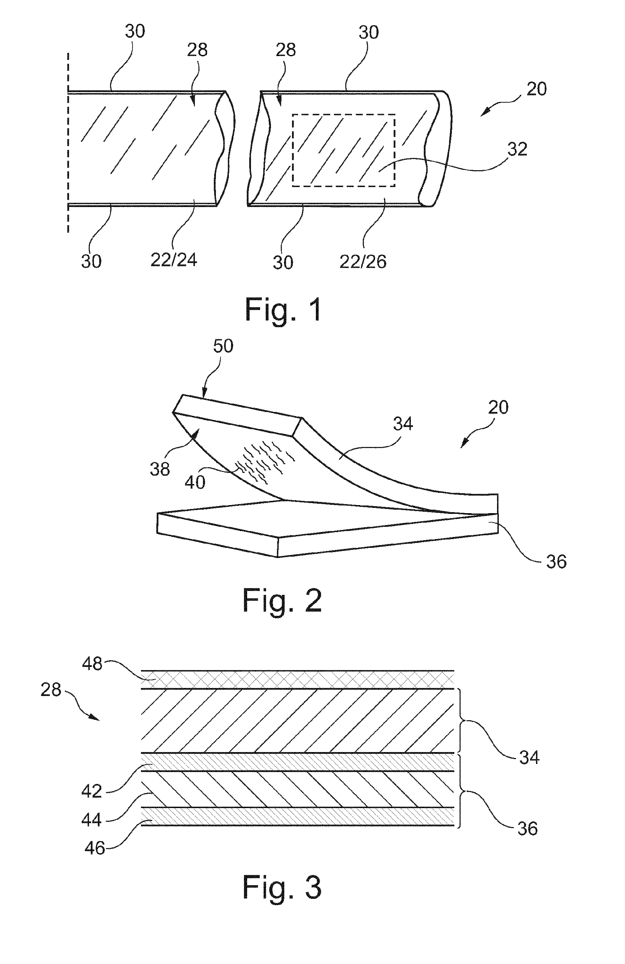

Das erfindungsgemäße Verpackungsmaterial 20 kann, wie in Figur 1 gezeigt, in Form einer Hülle bzw. eines Schlauchs 22 hergestellt werden. Figur 1 zeigt einen solchen Schlauch 22, getrennt in ein erstes Segment 24 und ein zweites Segment 26. Der Schlauch 22 ist durch zwei übereinanderliegende Mehrschichtfolien 28 gebildet, die im gezeigten Ausführungsbeispiel durch Siegelnähte 30 miteinander verschweißt sind.

Durch die gestrichelte Linie im zweiten Segment 26 ist angedeutet, dass sich im Innern des zweiten Segments 26 ein Lebensmittelprodukt 32 befindet.

Figur 2 verdeutlicht den Aufbau des erfindungsgemäßen Verpackungsmaterials 20 bzw. der Mehrschichtfolie 28. Diese ist gebildet durch eine Papierschicht 34 und eine Siegelschicht 36, wobei die Siegelschicht 36 mittels Klebstoff auf die Papierschicht 34 kaschiert ist. Im gezeigten Ausführungsbeispiel besteht die Papierschicht 34 aus einem transparenten oder halbtransparenten Material, beispielsweise Pergamin. Die Papierschicht 34 weist weiterhin eine Innenseite 38 auf, die der Siegelschicht 36 zugewandt ist. Auf der Innenseite 38 befindet sich ein Aufdruck 40, der somit zwischen der Papierschicht 34 und der Siegelschicht 36 angeordnet ist.

Figur 3 zeigt einen erfindungsgemäßen Aufbau der Mehrschichtfolie 28 im Schnitt. Erkennbar ist, dass die Siegelschicht 36 dreischichtig aufgebaut ist. Ausgehend von der Papierschicht 34 schließt sich eine Übergangsschicht 42 an, es folgt eine Basisschicht 44 und schließlich eine Kontaktschicht 46, die mit dem zu verpackenden Lebensmittel 32 in Kontakt kommt.

Die drei Schichten der Siegelschicht 36 weisen vorteilhafterweise unterschiedliche Anteile an anorganischem Füllstoff, beispielsweise Talkum oder Mikrotalkum auf. Die Basisschicht 44, die im Wesentlichen die Aufreißbarkeit beeinflusst, weist eine höhere Konzentration an Füllstoff als die beiden benachbarten Schichten auf, nämlich beispielsweise 40 bis 60%. Die Kontaktschicht 46 weist einen Anteil von etwa 20 bis 35% und die Übergangsschicht 42 von etwa 30 bis 40% auf.

Weiterhin ist eine Schutzlackschicht 48 auf einer Außenseite 50 der Papierschicht 34 erkennbar. Eine solche Schutzlackschicht 48 kann auch dann gegeben sein, wenn die Siegelschicht 36 einschichtig aufgebaut ist. Beispielsweise kann die Schutzlackschicht 48 einen Aufdruck schützen, der nicht auf der Innenseite 38 sondern auf der Außenseite 50 der Papierschicht 34 angeordnet ist.

Die Erfindung ist nicht auf die gezeigten und beschriebenen Ausführungsbeispiele beschränkt, sondern umfasst sämtliche Ausführungsvarianten, die sich dem Fachmann durch die vorangegangene Beschreibung erschließen. In einer besonders einfachen und kostengünstigen Ausführungsvariante kann auf die Papierschicht 34 vollständig verzichtet werden, wenn eine solche Monofolie ausreichend stark bzw. dick ausgeführt ist und durch die Zugabe von anorganischem Füllstoff in Bezug auf die gewünschten Eigenschaften korrekt eingestellt ist. Eine Stärke bzw. Dicke von 50 Mikrometer ist beispielsweise denkbar.

## Patentansprüche

1. Verpackungsmaterial (20) für Lebensmittel, gebildet durch eine Mehrschichtfolie (28), aufweisend
- eine Papierschicht (34),
- eine Siegelschicht (36) aus einem biologisch abbaubaren, fett- und wasserdichten Material.

2. Verpackungsmaterial (20) nach Anspruch 1,
**dadurch gekennzeichnet, dass**
die Siegelschicht (36) aus einem thermoaktivierbaren und/oder thermofusionierbaren Material gebildet ist.

3. Verpackungsmaterial (20) nach Anspruch 1 oder Anspruch 2,
**dadurch gekennzeichnet, dass**
die Siegelschicht (36) aus einem bioabbaubaren Polyesterpolymer gebildet ist.

4. Verpackungsmaterial (20) nach Anspruch 1 oder 2,
**dadurch gekennzeichnet, dass**
die Siegelschicht (36) im Wesentlichen aus einem Wachs, einem Biopolymer oder einem Gemisch aus Wachs und Biopolymer gebildet ist.

5. Verpackungsmaterial (20) nach einem der Ansprüche 1 bis 4,
**dadurch gekennzeichnet, dass**
die Papierschicht (34) zumindest halbtransparent ausgeführt und auf ihrer der Siegelschicht (36) zugewandten Innenseite (38) einen Aufdruck (40) aufweist.

6. Verpackungsmaterial (20) nach einem der Ansprüche 1 bis 5,
**dadurch gekennzeichnet, dass**
die Siegelschicht (36) einen anorganischen Füllstoff aufweist.

7. Verpackungsmaterial (20) nach Anspruch 6,
**dadurch gekennzeichnet, dass**
der anorganische Füllstoff ein mineralisches Material, vorzugsweise Talkum ist.

8. Verpackungsmaterial (20) nach Anspruch 6 oder 7,
**dadurch gekennzeichnet, dass**
der Anteil an anorganischem Füllstoff in der Siegelschicht (36) etwa 5 bis 75 Gew.-%, vorzugsweise 25 bis 40 Gew.-% beträgt.

9. Verpackungsmaterial (20) nach einem der Ansprüche 1 bis 8,
**dadurch gekennzeichnet, dass**
die Siegelschicht (36) dreischichtig aufgebaut ist, eine mittlere Basisschicht (44), eine dem Lebensmittel zugewandte Kontaktschicht (46) und eine der Papierschicht (34) zugewandte Übergangsschicht (42) aufweist.

10. Verpackungsmaterial (20) nach Anspruch 9,
**dadurch gekennzeichnet, dass**
die Stärke bzw. Dicke der Basisschicht (44) die Stärke bzw. Dicke der beiden anderen Schichten (42, 46) übersteigt.

11. Verpackungsmaterial (20) nach einem der Ansprüche 9 oder 10,
**dadurch gekennzeichnet, dass**
der Anteil an anorganischem Füllstoff in der Basisschicht (44) den Anteil an anorganischem Füllstoff in den beiden anderen Schichten (42, 46) übersteigt.

12. Verfahren zur Herstellung eines Verpackungsmaterials (20) für Lebensmittel, gebildet durch eine Mehrschichtfolie (28), aufweisend
- eine Papierschicht (34),
- eine Siegelschicht (36) aus einem biologisch abbaubaren, fett- und wasserdichten Material,
**gekennzeichnet durch** die Verfahrensschritte
- Bereitstellen einer Siegelschicht (36) in einem kontinuierlichen Verfahren,
- Bedrucken der Papierschicht (34),
- Verbinden der Siegelschicht (36) auf die Papierschicht (34).

13. Verfahren nach Anspruch 12, **gekennzeichnet durch** Aufkaschieren der
Siegelschicht (36) auf die Papierschicht (34).

14. Verfahren nach Anspruch 12 oder Anspruch 13, **gekennzeichnet durch**
Bedrucken der Innenseite der Papierschicht (34) vor dem Verbinden der Siegelschicht (36) mit der Papierschicht (34).

15. Verfahren nach einem der Anspruch 12 bis 14, **gekennzeichnet durch**
Bedrucken der Siegelschicht (36) als Siegelschichtfolie.

16. Verfahren nach einem der Anspruch 12 bis 15, **gekennzeichnet durch**
Versehen der Papierschicht (34) mit einer Schutzlackschicht (48).

17. Verfahren nach einem der Anspruch 12 bis 16, **gekennzeichnet durch**
Bereitstellen einer mehrschichtigen Siegelschicht (36), deren fertig extrudierte Schichten (42, 44, 46) per Coextrusion zusammengeführt werden, wobei vor einem Zusammenfügen der Schichten auf zumindest eine Innenseite einander zugewandter Schichten ein Klebstoff aufgetragen wird.
